# EUROPEAN PATENT APPLICATION

(11) **EP 4 008 697 A1**
(43) Date of publication of application: **08.06.2022**
(21) Application number: 20211373.4
(22) Date of filing: 02.12.2020
(51) Int. Cl.: C04B 14/06, C04B 28/02

(54) **METHOD FOR TESTING EFFECTS OF SAND QUALITY ON PLASTICIZING ADDITIVES IN MINERAL BINDER COMPOSITIONS**

(71) Applicant: Sika Technology AG, 6340 Baar (CH)
(72) Inventor: Velten, Ulf, 8955 Oetwil an der Limmat (CH); Weinkauf, Annette, 8048 Zürich (CH); Frunz, Lukas, 8305 Dietlikon (CH); Pegado, Luis, 5200 Brugg (CH); Müller, Thomas, 69207 Sandhausen (DE); Massholder, Peter, 74927 Eschelbronn (DE)
(74) Representative: Sika Patent Attorneys

(57) **Abstract**

A method for characterizing sands with regard to adsorption of plasticizing additives comprising the steps of:
a) Providing an aqueous mixture of the plasticizing additive with a defined concentration of the plasticizing additive;
b) Determination of a characteristic of the aqueous mixture whereby the characteristic is related to the proportion of the plasticizing additive in the aqueous mixture;
c) Contacting a sample of sand to be analyzed with the aqueous mixture or a sample thereof, so that the sand sample is completely immersed in the aqueous mixture or the sample thereof;
d) Taking a sample of supernatant liquid from the mixture of step;
e) Determination of the same characteristic as in step b) of the sample of supernatant liquid;
f) Comparing the characteristic of the aqueous mixture or the sample thereof obtained in step b) with the characteristic of the sample of supernatant liquid of step e) in order to decide whether the characteristics differ from each other by more than a predefined threshold or not.

## Description

### Technical field

The invention relates to a method for characterizing sands with regard to adsorption of plasticizing additives. Additionally, the invention is concerned with a method of producing a mineral binder composition.

### Background art

Sand quality has a large impact on mortar or concrete performance and may cause various problems such as increased water demand, high demand for plasticizing additives, bleeding, and pumpability issues. Some sands even give rise to multiple problems, which are interfering with each other.

Several main causes with problematic sands can be identified impacting the workability of concrete negatively: low fines, high fines, unfavorable grain shape, water adsorbance and adsorbance of plasticizing additives.

Especially, the presence of adsorbing substances, such as e.g. clays, leads to undesired effects in sands, which are expressed for example in a higher demand of water and adsorption of plasticizing additives, especially superplasticizers such as polycarboxylate ethers (PCE). Due to the intercalation of such kind of plasticizing additives into the structure of adsorbing clays, these additives are effectively removed from mortar or concrete composition, which are produced with sands comprising such kind of clays. Consequently, the workability of the mortar or concrete composition with a given dosage of plasticizing additive is significantly reduced.

In order to identify adsorption problems of sands, the so called "Methylene Blue (MB) test" is commonly used and described in standards (EN 933-9, ASTM 837-09). Methylene blue is a cationic dye that has a strong affinity for negatively charged surfaces, especially clays. This affinity is directly depending on the clay content in the sand and the nature of the clays. However, in practice it turned out that this indirect test is not always specific enough for predicting adsorption of plasticizing additives such as PCEs. Specifically, a high MB value may indicate the presence of swelling-clays but can also be erroneously distorted by the presence of Fe-rich minerals. Also, the absolute MB value, which needs to be determined in order to judge whether a sand is critical or not, is strongly depending on the mineralogical composition of sand. If the sand composition is unknown (quite often) the MB value may be misleading. Generally, it is not possible to distinguish between PCE and water adsorbing sands.

In this regard, WO 2020/109231 A1 (Chryso) describes a different approach, which is based on a special compound comprising a MPEG-5'000 chain attached to a dye, whereby the PEG chain can be adsorbed by the clays present in sands. It is then possible to perform a photometric measurement in order to find out how much of the compound was adsorbed by the clays. Thus, the proportion of adsorbed compound can be seen as a measure of the clay concentration in the sands of interest. However, this is not a robust method since it is not always specific enough for predicting adsorption of plasticizing additives either.

Furthermore, all available sand characterizing methods known so far have in common that they are only able to indicate that sand may have a high or a low adsorptive behavior. However, these methods only indicate the adsorptive behavior in general, without distinguishing between the types of adsorption. Specifically, most of the known methods often cannot indicate whether the sand is adsorbing the plasticizing additive, the mixing water or both in a manner sufficiently precise.

There is thus a need to develop new and improved solutions which reduce or overcome the aforementioned drawbacks.

### Disclosure of the invention

It is an object of the present invention to provide an improved method, which allows for characterizing sands with regard to adsorption of plasticizing additives, especially polycarboxylate ether-based additives. In particular, the method shall allow for distinguishing between the adsorption of plasticizing additives and the adsorption of water. Preferably, the method shall be as fast and simple as possible and preferably allow for a direct measurement of the adsorption properties of the sands of interest towards plasticizing additives and, preferably, towards water too. Desirably, the method should furthermore be suitable for predicting an effective mitigating agent and/or a mitigating strategy that allows for mitigating negative effects of the sands in a reliable and targeted manner under real conditions, especially in mineral binder compositions.

Surprisingly, it has been found that the problem of the invention can be solved by the features of claim 1. Thus, the core of the invention is a method for characterizing sands with regard to adsorption of plasticizing additives, preferably with regard to adsorption of plasticizing additives and water adsorption, comprising the steps of:
a) Providing an aqueous mixture of the plasticizing additive with a defined concentration of the plasticizing additive;
b) Determination of a characteristic of the aqueous mixture whereby the characteristic is related to the proportion of the plasticizing additive in the aqueous mixture;
c) Contacting a sample of sand to be analyzed with the aqueous mixture or a sample thereof, so that the sand sample is completely immersed in the aqueous mixture or the sample thereof;
d) Taking a sample of supernatant from the mixture of step c);
e) Determination of the same characteristic as in step b) of the sample of supernatant liquid;
f) Comparing the characteristic of the aqueous mixture or the sample thereof obtained in step b) with the characteristic of the sample of supernatant liquid of step e) in order to decide whether the characteristics differ from each other by more than a predefined threshold or not.

In short, in the inventive method, a sand sample is mixed with a defined aqueous mixture of the plasticizing additive and any potential adsorption of the plasticizing additive is identified by comparing the characteristics of the same or an identical aqueous mixture of the plasticizing additive after interaction with the sand. The inventive method provides the user with a cheap and fast way, in certain implementations of the method even without the need of employing large and expensive equipment, for identifying the adsorbance potential of a given sand towards plasticizing additives. In contrast to the MB measurement, the inventive method is more reliable since it is based on the direct interaction between the sand of interest and the plasticizing additive. Especially, in contrast to the MB test or other known tests, the inventive method is not based on an indirect measurement but on the direct measurement of the adsorption properties of a given sand towards a real plasticizing additive.

The inventive method allows for directly identifying whether a sand is adsorbing plasticizing additives, especially PCEs, or not. Furthermore, it can be used for efficiently adjusting the concentration of the plasticizing additive and/or for selecting an effective mitigating agent and/or a mitigating strategy, such as e.g. a special water reducing PCE and/or a clay blocking agent, in order to optimize the mortar or concrete performance with a given sand.

Compared to the known approaches, such as for example proposed in WO 2020/109231 A1 (Chryso), the inventive solution turned out to be much more robust. Without being bound by theory, this might be explained as follows: By using a PEG terminated dye to characterize the adsorptive behavior of a given sand, the intercalation of a PCE with PEG side chains in swelling clays via the side chains is simulated to a certain extend. However, this approach neglects that PCEs can adsorb via their anionic backbone on positively charged surfaces, e.g. on negatively charged clays or cement hydrates having a positive zeta potential due to an adsorbed layer of calcium. Therefore, the proportion of non-ionic PEG chains adsorbed onto such surfaces may be less when compared with PCEs.

In contrast to the approach described in WO 2020/109231 A1 (Chryso), the inventive method makes use of a real plasticizing additive as a test substance. Consequently, the adsorption behavior of the given sand is tested under conditions, which are much closer to real conditions, e.g. conditions present in mineral binder compositions.

Furthermore, the inventive method allows the distinction between the adsorption of the plasticizing additive and the adsorption of mixing water. This is highly important since a pure water adsorbing sand, for example, needs, often a different mitigating strategy than a sand adsorbing the plasticizing additives as such. Specifically, the inventive method allows for providing the right mitigating agent and/or strategy for a certain technical cause of a sand problem. Therefore, it can be avoided that e.g. a sacrificial additive, designed for inerting swelling clays, for reducing PCE adsorption is proposed for a problem related to non-swelling clays, which mainly cause pure water adsorption.

For example, if a certain mineral binder composition shows a high water demand, the inventive test with the sands used for the mineral binder composition directly indicates whether the high water demand is due to adsorption of the plasticizing additive or not. If the test is positive (i.e. the test indicates adsorption of the plasticizing additive), the high water demand must be at least partially due to adsorption of the plasticizing additive. If the test is negative (i.e. the test indicates no adsorption of the plasticizing additive), adsorption of the plasticizing additive can be excluded and the high water demand must be due to water adsorption. Thus, depending on the outcome of the test, an appropriate mitigating agent and/or strategy can be selected in a targeted manner.

More specifically, with the inventive method, negative impacts of sand to mineral binder compositions, e.g. negative impacts on concrete performance, can be mitigated in a targeted manner by choosing the right type and amount of a mitigating agent and/or by choosing a specifically adapted mitigating strategy, e.g. specifically adapted additives for inerting swelling clays or non-swelling clays. This is in sharp contrast to known approaches. Since these approaches typically do not allow for an identification of the cause of a sand problem, there is no possibility to select the most suitable mitigating measures.

Additionally, the inventive method allows for characterizing sands under conditions that are very close to or essentially identical with real conditions, e.g. conditions in real mineral binder compositions. Therefore, effects changing the properties of the sands, such as e.g. a high pH and/or a certain salt concentration, are directly taken into account. This is highly beneficial since the adsorption behavior of a given sand may be changed significantly when conditions change. For example, delamination of clays comprised in sands may give rise to an increase of exposed clay surfaces under cementitious conditions. This is turn will affect adsorption properties towards plasticizing additives and/or water.

In addition, the test can be used to check whether a given sand is exceeding a critical amount of fines, i.e. fines with a grain size <125 µm, especially < 63 µm, in particular < 2 µm.

Further aspects of the invention are the subject matter of the further claims.

### Ways of carrying out the invention

A first aspect of the invention relates to a method for characterizing sands with regard to adsorption of plasticizing additives, preferably with regard to adsorption of plasticizing additives and water adsorption, comprising the steps of:
a) Providing an aqueous mixture of the plasticizing additive with a defined concentration of the plasticizing additive;
b) Determination of a characteristic of the aqueous mixture, whereby the characteristic is related to the proportion of the plasticizing additive in the aqueous mixture;
c) Contacting a sample of sand to be analyzed with the aqueous mixture or a sample thereof, so that the sand sample is completely immersed in the aqueous mixture or the sample thereof;
d) Taking a sample of supernatant liquid from the mixture of step c);
e) Determination of the same characteristic as in step b) of the sample of supernatant liquid;
f) Comparing the characteristic of the aqueous mixture or the sample thereof obtained in step b) with the characteristic of the sample of supernatant liquid of step e) in order to decide whether the characteristics differ from each other by more than a predefined threshold or not.

In particular, an "aqueous mixture of the plasticizing additive" is a mixture comprising water, the plasticizing additive and optionally one or more further components. Especially, water is the main liquid component of the aqueous mixture or the component with the highest proportion of weight of all liquid components in the mixture. Especially, the aqueous mixture provided in step a) is an aqueous mixture consisting of water and the plasticizing additive. However, it is possible to provide for example an aqueous mixture consisting of water, plasticizing additive and one or more salts.

A "characteristic" is meant to be a physical and/or chemical characteristic or property of the aqueous mixture. The characteristic is dependent on the proportion of the plasticizing additive in the aqueous mixture. For example, the characteristic can be the concentration of the plasticizing additive as such, an effect of the aqueous mixture and/or the plasticizing additive upon interaction with another substance, and/or the characteristic is a measurable chemical and/or physical parameter of the aqueous mixture, which is depending on the proportion of the plasticizing additive.

According to the invention, a "plasticizing additive" is an additive for a mineral binder composition, which improves its workability. Especially, the plasticizing additive is a plasticizer, fluidizer and/or dispersant, especially a superplasticizer.

In particular the plasticizing additive is a superplasticizer, especially a co-polymer comprising a polymer backbone and side chains bonded thereto. Especially the copolymer is a polycarboxylate ether (PCE), which has a polycarboxylate backbone and polyether side chains, wherein the polyether side chains are bound preferably via ester, ether and/or amide groups to the polycarboxylate backbone.

In particular, the copolymer comprises acid group-bearing monomer units M1 and side chain-bearing monomer units M2. Preferably the acid group-bearing monomer units M1 include carboxylic acid groups, sulfonic acid groups, phosphoric acid groups and/or phosphonic acid groups.

Especially, the side chain-bearing monomer unit M2 includes polyalkylene oxide side chains, especially polyethylene oxide and/or polypropylene oxide side chains.

More particularly, the acid group-bearing monomer units M1 have a structure of the formula I:

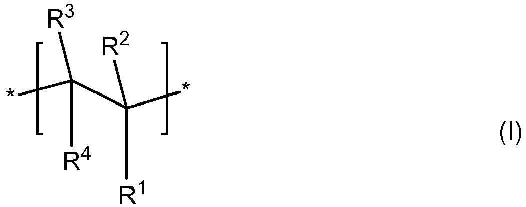

The side chain-bearing monomer units M2 preferably have a structure of the formula II: 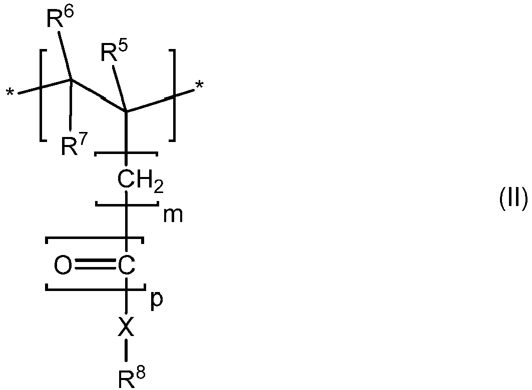 where
R¹, in each case independently, is -COOM, -SO₂-OM,
-O-PO(OM)₂ and/or -PO(OM)₂,
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
   or where R¹ forms a ring together with R⁴ to give -CO-O-CO-,
M, independently of one another, represents H⁺, an alkali metal ion, an alkaline earth metal ion, a di- or trivalent metal ion, an ammonium ion or an organic ammonium group;
m = 0, 1 or 2,
p = 0 or 1,
X, in each case independently, is -O- or -NH-,
R⁸ is a group of the formula -[AO]ₙ-R^{a}
where A = C₂- to C₄-alkylene, R^{a} is H, a C₁- to C₂₀-alkyl group, -cycloalkyl group or -alkylaryl group,
and n = 2-250, especially 10-200.

Further monomers may be present as well in the copolymer.

Especially, in step a) a concentration of the plasticizing additive is from 0.0001 - 10 wt%, especially 0.001 - 7 wt.%, for example, 0.01 - 5 wt%, in particular 0.1 - 2 wt.%, with respect to the combined weight of water and plasticizing additive.

In particular, in step a) the aqueous mixture is prepared with a pH of 11 - 14, especially 12 - 13.5, in particular 12.5 - 13.5. Aqueous mixtures with such a pH best reflect the conditions present in mortar or concrete compositions in which the plasticizing additives are typically used.

In step b), the determination of the characteristic is in particular performed in order to obtain a reference value.

In particular, in step c) a weight ratio of the aqueous mixture or a sample thereof to the sample of sand is 1 - 10, especially 1 - 5, in particular 1.5 - 4.

Preferably, before contacting the sand to be analyzed with the aqueous mixture or the sample thereof, the sand is dried. Drying the sand excludes that the moisture content changes the water concentration in the aqueous mixture. Drying can be performed for example in an oven at a temperature of 30 - 90°C, especially 50 - 70°C. These temperatures are in particular helpful to avoid formation of agglomerations of fine sand particles, which may occur at temperatures above 100°C.

Preferably, in step c), the sand sample is mixed with the aqueous mixture or a sample thereof for a predefined time period, e.g. for 30 seconds to 2 hours. Preferably, mixing is performed by stirring, shaking and/or vibrating. This ensures homogeneous mixing. Stirring can be performed with 800 - 1'000 rpm whereas vibration or shaking can be performed with 50 - 400 rpm.

The aqueous mixture or a sample thereof used in step c) can be the aqueous mixture or a sample thereof used in step a) and/or it can be an aqueous mixture or a sample thereof with identical composition.

Especially, in step c) the aqueous mixture or a sample thereof is contacted stepwise with the sample of sand to be analyzed. In particular, a first portion of water or of the aqueous mixture or of a sample thereof is contacted, especially mixed, with the sample of sand, and subsequently a second portion of water or of the aqueous mixture or of a sample thereof is added. This helps to obtain a highly homogeneous mixture in step c). Especially, the plasticizing additive is added separately from the first and the second portions or the plasticizing additive is added as a component of the second portion.

For example, a first portion consisting of water is added, then the plasticizing additive is added and subsequently the second portion of water is added. Thereby, the overall proportions of water and plasticizing additive correspond to the aqueous mixture of step a).

In another example, a first portion consisting of water is added, then the second portion of water comprising the plasticizing additive is added. Thereby, the overall proportions of water and plasticizing additive correspond to the aqueous mixture of step a).

Especially, during and/or after step d), any undesired components may be removed from the mixture of step c) and/or from the sample of supernatant liquid. Undesired components might be substances affecting a proper determination of the characteristic in step e).

In particular during and/or after step d) fines, especially fines with a grain size < 125 µm, especially < 63 µm, in particular < 2 µm, are removed from the sample of supernatant liquid. In particular, the fines are removed from the sample of supernatant liquid by filtration and/or centrifugation, especially by filtration. Centrifugation can be performed with 3'000 - 5'000 rpm, in particular for 5 - 10 minutes.

As it turned out, fines might influence the determination of the characteristic in certain applications. Thus, for a proper determination of the adsorption properties of the sands, it might be helpful to obtain a sample of supernatant liquid free of fines. However, for other applications, fines might not be a problem, in this case no removal of fines is required.

In step e), the determination of the characteristic is in particular performed in order to obtain a test value.

Especially, when comparing the characteristics in step f), the reference value obtained in step b) is compared with the test value obtained in step e), e.g. by subtracting the test value from the reference value.

For example, the predefined threshold of step f) corresponds to a predefined proportion of the characteristics or the reference value obtained in step b). In particular the threshold of step f) equals 20%, especially 10%, particularly 5%, very particularly 4%, of the characteristics or the reference value obtained in step b).

If in step f) the characteristics differ from each other by more than the predefined threshold, a certain proportion of the plasticizing additive has been adsorbed by the sand sample in step c). Consequently, the concentration of plasticizing additive in the sample of supernatant liquid is lower than the concentration of the plasticizing additive in the original aqueous mixture provided in step a). Thus, it can be concluded that the given sand is problematic with regard to the adsorption of plasticizing additives. If this sand is used for a mortar or concrete composition, an appropriate mitigating strategy is required, e.g. by adding a mitigating agent.

A "mitigating agent" is meant to be a substance capable of reducing the undesired effects of the sands, for example the adsorbing effects of the sand. Especially, the mitigating agent is different from the plasticizing additive.

In particular, the mitigating agent is a clay blocker, such as e.g. a polycarboxylate ether, non-ionic comb polymers, lignosulfonates, sulfonated naphthalene condensates, sulfonated melamine condensates, polycations, cationic amines, polyethylene oxides (PEGs, MPEGs), vinyl copolymers, homopolymers or copolymers of polycarboxylic acids (e.g. of acrylic acid, methacrylic acid, maleic acid and/or itatonic acid), carbohydrates (like gluconate, glucose, corn syrups, sugar, molasses, caramel color, oligomeric starch or cellulose derivates, cyclodextrins).

Especially, a non-ionic comb is a comb polymer as described in WO 2020/070095 A1, page 32, line 15 - page 33, line 4.

Otherwise, if in step f) the characteristics differ from each other by less than the predefined threshold, no significant adsorption of plasticizing additive took place in step c). Thus, it can be concluded that the given sand is unproblematic with regard to the adsorption of plasticizing additives.

This information can directly be used to decide if a mortar or concrete composition with the given sand needs a special treatment, e.g. with a mitigating agent.

Preferably, if the comparison of step f) shows that the characteristic of the aqueous mixture or the sample thereof and the characteristic of the sample of supernatant liquid differ from each other by more than a given threshold, steps c) to f) are repeated, whereby in step c) a different aqueous mixture comprising a modified concentration of the plasticizing additive and/or comprising a defined concentration of a mitigating agent is used.

Preferably, the repetition is continued until the comparison in step f) shows that the characteristics of the aqueous mixture or a sample thereof and the characteristic of the sample of supernatant liquid differ from each other by less than the given threshold.

Put differently, steps c) to f) preferably are repeated until the comparison in step f) shows that the characteristics of the aqueous mixture or the sample thereof and the characteristic of the sample of supernatant liquid differ from each other by less than the given threshold whereby the concentration of the plasticizing additive and/or the type of mitigating agent and/or its concentration is modified in each repetition.

According to a further preferred implementation, the inventive method additionally comprises an additional step a'). The additional step a') comprises the following sub-steps:
(i) Determination of the water demand of a mineral binder composition comprising the sand to be analyzed and the plasticizing additive;
(ii) Comparing the water demand determined in sub-step (i) with a standard water demand for the given mineral binder composition.

The water demand is meant to be the proportion of water required to obtain a given mineral binder composition with a predefined rheology parameter, especially a predefined viscosity and/or flow.

The standard water demand is the demand of water of the given mineral binder composition produced with a standardized sand instead of the sand to be analyzed. The standardized sand preferably is a neat sand, which in particular has a low water adsorption.

Thus the mineral binder composition used to determine the standard water demand in step (ii) comprises the same type and proportion of mineral minder and the same type and proportion of plasticizing additive and the same proportion of sand, as the mineral binder composition used in step (i). In particular, apart from the different sands, the mineral binder composition used to determine the standard water demand is identical to the mineral binder composition used in step (i).

In principle, the additional step a') can be performed at any time before, during or after the other steps of the inventive method. Preferably step a') is performed before step a).

If the comparison in step (ii) shows that the water demand determined in sub-step (i) is higher than the standard water demand, especially higher than 105%, in particular higher than 120%, of the standard water demand, the sand to be analyzed is known to adsorb water and/or the plasticizing additive.

If step a') shows that the water demand is higher and step f) on a first execution shows that the characteristics differ from each other by more than a predefined threshold, it can be concluded that the plasticizing additive is adsorbed by the given sand.

If step a') shows that the water demand is higher and step f) on a first execution shows that the characteristics do not differ from each other by a predefined threshold, it can be concluded that the plasticizing additive is not adsorbed but a water adsorbing sand is present.

Thus, step a') allows for deciding if a sand related problem exists at all. If yes the result of step a') can directly be used to distinguish the type of adsorption problem of the given sand. This is in particular helpful if there is a high water demand but no adsorption of the plasticizing additive since then it can be concluded that the sand must be water adsorbing. Consequently, appropriate mitigating agents and/or strategies can be selected in a targeted manner.

According to a further aspect of the present invention, the inventive method comprises a step of providing an admixture for preparing a mineral binder composition, whereby the admixture comprises the plasticizing additive and/or the mitigating agent in proportions derived with the inventive method, especially as derived in the last repetition of steps c) to f) as described above and/or as derived in step a').

According to a first highly preferred implementation, the inventive method is performed as follows:
- in step b), an aqueous slurry comprising a sample of the aqueous mixture of step a) and a defined proportion of mineral binder, especially cement, with a given ratio (w/c) of water to mineral binder is produced; and a rheology parameter of the aqueous slurry, especially the slump flow, is determined as the characteristic of the sample of the aqueous mixture; and
- in step e) another aqueous slurry is produced with the same mineral binder as in step b) and with the supernatant liquid as the water, whereby the ratio of water or supernatant liquid, respectively, to the mineral binder is the same as in step b); and the same rheology parameter as in step b), especially the slump flow, is determined as the characteristic of the sample of supernatant liquid.

Especially, the rheology parameter is selected from viscosity, flow point, yield point, slump flow, flow table test, slump, slump flow spread, flow time, flowing speed, V funnel test and/or flow-down time. Preferably, the slump flow is taken as the rheology parameter. The slump flow can be assessed in line with EN 12350-8:2019 or a similar method.

Thus, in this implementation, the inventive method is a phenomenological test, which is based on the comparison between a rheology parameter, especially the slump flow, using only cement with a specific dosage of plasticizing additive, and the aqueous mixture comprising the plasticizing additive after interacting with a given sand, respectively. Put differently, a sand sample is mixed with a defined aqueous mixture comprising a plasticizing additive and any potential adsorption of the plasticizing additive is identified by using the same mixture after interaction with the sand in a cement slurry test.

A significant change in rheology parameters, especially a decrease in the slump flow, between the two cements slurry tests indicates the presence of materials adsorbing the plasticizing additive within the sand.

Thereby, preferably, the concentration of the plasticizing additive in step a) is chosen to achieve a predefined rheology parameter, in particular a predefined slump flow, of the slurry produced in step b) at a predefined proportion of mineral binder and a predefined ratio (w/c) of water to hydraulic binder.

In particular, the rheology parameter, especially the slump flow, is defined from 12 - 18 cm, especially from 13 - 16 cm, in particular 14 cm, and the ratio of water to cement (w/c) is chosen from 0.28 - 0.5, especially from 0.3 - 0.4, in particular 0.35. Thereby, the slump flow is in particular determined in line with EN 12350-8:2019 using a mini cone with a height of 58 mm, a lower inner diameter of 38 mm and an upper inner diameter of 19 mm.

The term "mineral binder" denotes, for example, a binder which reacts in the presence of water in a hydration reaction to form solid hydrates or hydrate phases. This can be, for example, a hydraulic binder (for example, a cement or a hydraulic lime), a latent hydraulic binder (for example, slag), a pozzolanic binder (for example, fly ash) or a nonhydraulic binder (gypsum or calcium lime). The term "cementitious binder" or "cementitious binder composition" here denotes, for example, a binder or a binder composition having a proportion of at least 5 wt %, for example, at least 20 wt %, for example, at least 35 wt %, for example, at least 65 wt % cement clinker. The cement clinker can be a Portland cement clinker. In the present context, cement clinker can denote a ground cement clinker.

For example, the mineral binder contains a hydraulic binder, for example, a cement. A cement having a cement clinker proportion of ≥ 35 wt % can be used.

For example, the cement is a CEM I, CEM II, CEM III, CEM IV or CEM V type Portland cement (according to the standard EN 197-1), a calcium aluminate cement (according to the standard EN 14647:2006-01), and/or a calcium sulphoaluminate (CSA) cement.

Portland cements which are described in alternative standards, for example ASTM standards or Chinese standards are equally suitable. According to preferred embodiments, Portland cement is of type CEM I. According to embodiments, the Portland clinker content in a Portland cement of the present invention is at least 35 w%, preferably at least 65 wt.-%, especially at least 95 wt.-%, each based on the total dry weight of the cement. According to embodiments, the Portland cement clinker has an aluminium content, expressed as Al₂O₃, of less than 10 wt.-%, preferably less than 8 wt.-%, more preferably less than 6 wt.-%, in each case relative to the total dry weight of the clinker. According to especially preferred embodiments, the Blaine surface of the Portland cement as measured according to standard EN 196-6:2010 is between 1'500 - 10'000 cm²/g, preferably 2'000 - 9'000 cm²/g, especially 3'000 - 7'000 cm²/g. Preferably, the sulphate content of Portland cements of the present invention is optimized to an SO₃ content of not more than 4.0 wt.-%, relative to the total dry weight of the cement.

Preferably, a CSA cement within the present context is a cement with a main phase consisting of C₄(A₃₋ₓFₓ)₃ (4 CaO · 3-x Al₂O₃ · x Fe₂O₃ · CaSO₄) where x is an integer of from 0 - 3.

A proportion of the hydraulic binder in the entire mineral binder can be at least 5 wt %, for example, at least 20 wt %, for example, at least 35 wt %, for example, at least 65 wt %. According to an exemplary embodiment, the mineral binder consists of at least 95 wt % hydraulic binder, for example, cement clinker.

The binder or the binder composition can contain, or consist of, other binders. They are, for example, latent hydraulic binders and/or pozzolanic binders. Suitable latent hydraulic and/or pozzolanic binders are, for example, slag, fly ash and/or silica dust. Similarly, the binder composition can contain inert substances, such as, for example, limestone, quartz flour and/or pigments. In an exemplary embodiment, the mineral binder contains 5-95 wt %, for example, 5-65 wt %, for example, 15-35 wt % latent hydraulic and/or pozzolanic binders. Advantageous latent hydraulic and/or pozzolanic binders are slag and/or fly ash.

In an exemplary embodiment, the mineral binder contains a hydraulic binder, in particular a cement or cement clinker, and a latent hydraulic and/or pozzolanic binder, preferably slag and/or fly ash. The proportion of the latent hydraulic and/or pozzolanic binder here can be 5-65 wt %, for example, 15-35 wt %, with at least 35 wt %, for example, at least 65 wt % hydraulic binder.

In particular, the mineral binder used in the inventive method is a cementitious binder, especially cement, preferably Portland cement. However, depending on specific circumstances, other binders might be suitable as well.

Especially the mineral binder is a mineral binder composition **B** comprising calcined clay, limestone, and Portland cement. Throughout the present invention the term "clay" refers to a solid material composed to at least 30 wt.-%, preferably to at least 35 wt.-%, especially to at least 75 wt.-%, each relative to its dry weight, of clay minerals. A calcined clay **(CC)** is a clay material that has been put to a heat treatment, preferably at a temperature between 500 - 900 °C, or in a flash calcination process at temperatures between 800 - 1100 °C. A suitable flash calcination process is for example described in WO 2014/085538. A calcined clay is an anhydrous material. According to embodiments, calcined clays are produced by heat treatment separately from other constituents of the binder composition **B** and especially separately from the Portland cement and/or other pozzolanic and/or latent hydraulic materials present. It is preferred within the present context that during the calcination of clay, the clay material is dehydroxylated to an amorphous material while the formation of crystalline high temperature aluminosilicate phases such as mullite is prevented. Calcined clays, and especially calcined kaolinite, generally are amorphous, have a significantly higher specific surface as compared to the original clay, and have a pozzolanic activity. According to especially preferred embodiments of the present invention, the calcined clay is metakaolin. Metakaolin is a material resulting from the calcination of kaolinite or minerals that are rich in kaolinite, e.g. have a content of kaolinite of at least 30 wt.-%, preferably to at least 35 wt.-%, relative to its dry weight. Calcination temperatures for the manufacturing of metakaolin typically are in the range of 500 - 900 °C.

According to embodiments, the calcined clay is ground to a powder with a 45 µm residue as measured according to ASTM C 430-96 (2003) of at least 0.5 wt.-%, preferably at least 2 wt.-%, still more preferably at least 10 wt.-%, especially at least 20 wt.-%.

In preferred embodiments of the present invention the chemical compositions of limestone **(L)** and Portland cement **(P)** are as defined in standard EN 197-1:2011. In the alternative, limestone **(L)** may also stand for magnesium carbonate, dolomite, and or mixtures of magnesium carbonate, dolomite, and/or calcium carbonate. It is especially preferred that limestone **(L)** within the present context is a naturally occurring limestone mainly consisting of calcium carbonate (typically calcite and/or aragonite) but typically also containing some magnesium carbonate and/or dolomite. Limestone **(L)** may also be a naturally occurring marl.

Limestone **(L),** within the present context, is a ground material that is not heat treated. Especially, the limestone is not decarbonated. According to embodiments, the limestone has a Blaine surface of 3'000 - 15'000 cm²/g.

The Blaine surface is measured as described in standard EN 196-6:2010.

According to embodiments, the binder composition **B** of the present invention comprises calcined clay **(CC),** limestone **(L),** and Portland cement **(P)** in the following weight ratios:
**P** : **CC** is from 33 : 1 to 1 : 1, preferably from 8 : 1 to 1 : 1,
**CC : L** is from 10 : 1 to 1 : 33, preferably from 5 : 1 to 1 : 10, and
**P** : **L** is from 20 : 1 to 1 : 4, preferably from 5 : 1 to 1 : 1.

According to embodiments, the binder composition **B** of the present invention consists to at least 65 wt.-%, preferably at least 80 wt.-%, more preferably at least 92 wt.-%, in each case relative to the total dry weight of the composition, of calcined clay, limestone, and Portland cement.

According to embodiments of the present invention, a binder composition **B** comprises a mixture of:
a) 25 - 100 mass parts of Portland cement **(P),**
b) 3 - 50 mass parts of calcined clay **(CC),** especially of metakaolin,
c) 5 - 100 mass parts of limestone **(L).**

Especially, in such binder compositions **B,** the mass ratios of calcined clay **(CC),** limestone **(L),** and Portland cement **(P)** are as follows:
**P** : **CC** is from 33 : 1 to 1 : 1, preferably from 8 : 1 to 1 : 1,
**CC : L** is from 10 : 1 to 1 : 33, preferably from 5 : 1 to 1 : 10, and
**P** : **L** is from 20 : 1 to 1 : 4, preferably from 5 : 1 to 1 : 1.

According to a specific embodiment of the present invention, a binder composition **B** consists of a mixture of:
a) 50 mass parts of Portland cement **(P),**
b) 20 - 50 mass parts of calcined clay **(CC),** especially of metakaolin,
c) 10 - 50 mass parts of limestone **(L).**

In particular, a binder composition **B** of the present invention does comprise calcium aluminate cement according to EN 14647 and/or calcium sulphoaluminate cement in not more than 5 wt.-%, preferably not more than 2 wt.-%, relative to the total dry weight of the binder composition **B.** Especially, the content of Portland cement in a binder composition **B** of the present invention is higher than the content of calcium aluminate cement and/or calcium sulphoaluminate cement.

According to embodiments, a binder composition **B** of the present invention additionally comprises calcium sulfate in an amount of 1 - 8 wt.-%, relative to the total dry weight of the composition. A binder composition **B** of the present invention does not comprise calcium sulfate as the main binder. Calcium sulfate can be in the form of gypsum, calcium sulfate dihydrate, calcium sulfate hemihydrate (in the alpha or beta form), and/or anhydrite.

According to embodiments, a binder composition **B** of the present invention additionally comprises further latent hydraulic and/or pozzolanic materials. Suitable further latent hydraulic and/or pozzolanic materials are, for example, volcanic rock, pumice, glass dust, diatomaceous earth, fumed silica, precipitated silica, slag, fly ash, silica fume, and/or burnt slate. According to certain embodiments, the binder composition **B** comprises up to 20 wt.-%, preferably up to 5 wt.-%, in each case relative to the total dry weight of the composition, of further latent hydraulic and/or pozzolanic materials.

A suitable binder composition **B** of the present invention may thus consist to an extent of at least 65 wt.-%, preferably at least 80 wt.-%, more preferably at least 92 wt.-%, in each case relative to the total dry weight of the composition, of calcined clay **(CC),** limestone **(L),** and Portland cement **(P)** in weight ratios of **P** : **CC** from 33 : 1 to 1 : 1, preferably from 8 : 1 to 1 : 1, **CC** : **L** from 10 : 1 to 1 : 33, preferably from 5 : 1 to 1 : 10, and **P : L from 20 :** 1 to 1 : 4, preferably from 5 : 1 to 1 : 1, and of 1 - 8 wt.-% of calcium sulfate.

According to embodiments of the present invention, a binder composition B consists to 92 - 99 wt.-%, relative to the total dry weight of the binder composition **B,** of a mixture of
a) 25 - 100 mass parts of Portland cement **(P),**
b) 3 - 50 mass parts of calcined clay **(CC),** especially of metakaolin,
c) 5 - 100 mass parts of limestone **(L),** and to
   1 - 8 wt.-%, relative to the total dry weight of the binder composition **B,** of calcium sulfate.

According to a specific embodiment of the present invention, a binder composition **B** consists to 92 - 99 wt.-%, relative to the total dry weight of the binder composition **B,** of a mixture of
a) 50 mass parts of Portland cement **(P),**
b) 20 - 50 mass parts of calcined clay **(CC),** especially of metakaolin,
c) 10 - 50 mass parts of limestone **(L),** and
to 1 - 8 wt.-%, relative to the total dry weight of the binder composition **B,** of calcium sulfate.

Especially, in such binder compositions **B,** the mass ratios of calcined clay **(CC),** limestone **(L),** and Portland cement **(P)** are as follows:
**P** : **CC** is from 33 : 1 to 1 : 1, preferably from 8 : 1 to 1 : 1,
**CC : L** is from 10 : 1 to 1 : 33, preferably from 5 : 1 to 1 : 10, and
**P** : **L** is from 20 : 1 to 1 : 4, preferably from 5 : 1 to 1 : 1.

According to preferred embodiments, where a binder composition **B** consists to 92 - 99 wt.-%, relative to the total dry weight of the binder composition **B,** of a mixture of
a) 25 - 100 mass parts of Portland cement **(P),**
b) 3 - 50 mass parts of calcined clay **(CC),** especially of metakaolin,
c) 5 - 100 mass parts of limestone **(L),** and to
   1 - 8 wt.-%, relative to the total dry weight of the binder composition **B** of calcium sulfate.

Especially such binder composition **B** does not contain any further latent hydraulic and/or pozzolanic materials, especially does not contain any of volcanic rock, pumice, glass dust, diatomaceous earth, fumed silica, precipitated silica, slag, fly ash, silica fume, and/or burnt slate.

A binder composition **B** of the present invention is obtainable by intermixing of the constituents in dry form. Suitable methods of mixing are known to the person skilled in the art. Especially, a binder composition **B** of the present invention can be obtained by intermixing calcined clay, limestone, and optionally calcium sulfate, followed by blending this mix with Portland cement. Other orders of mixing are, however, also possible. It is also possible to intergrind two or more of the constituents of a binder composition **B.** It is, however, preferred within the present context that the calcined clay be ground separately of the other constituents.

According to especially preferred embodiments, a binder composition **B** of the present invention is obtained by mixing the constituents of the binder composition **B** in dry form. It is particularly not possible within the present context to produce a binder composition **B** by mixing the constituents followed by a heat treatment or clinkering procedure. It is thus, for example, not possible to prepare a binder composition **B** of the present invention by mixing calcined clay, limestone, optionally calcium sulfate and Portland cement followed by a step of heating the resulting mix to more than 150 °C, especially in a kiln.

Noteworthy, the invention further allows for identifying the binder that is best compatible with the given sand. For this, the inventive method can be performed with different types of mineral binder.

Preferably, in this first implementation, in step c) a weight ratio of the aqueous mixture or a sample thereof to the sample of sand is 1 - 10, especially 1 - 2, in particular 1.5.

Overall, the first highly preferred implementation is beneficial because it is very simple and easy to perform.

Specifically, there is no special equipment and/or indicator (methylene blue dye; PEG-terminated dye) required. In particular, no burette/stirrer (required for the MB test) and no photometer (required for the approach described in WO 2020/109231 A1 or often used for the MB test) are needed.

Furthermore, the methods allow for a direct discrimination between adsorption of the plasticizing additive and water adsorption. Especially, all type of PCE adsorption, e.g. adsorption via side chains or via backbone, adsorption onto inner- and outer mineral surfaces as well as complexation are considered. Additionally, when compared to the MB test, the results are neither influenced by oxidizing nor by reducing conditions.

Furthermore, the test allows for gaining additional information concerning the fines contents (see below).

Thus, the results obtainable are highly conclusive, i.e. similar to TOC measurements (see second highly preferred implementation below), and allow for a proper selection of a mitigating agent and/or strategy.

According to a second highly preferred implementation of the inventive method, in step b) and e), the total organic content of the aqueous mixture or the sample of supernatant liquid is determined as the characteristic.

Determination of the total organic content is a technique known per se. Thereby, a sample is first oxidized so that all carbon atoms contained in the sample are selectively converted into carbon dioxide (CO₂). The CO₂ formed is transferred by a carrier gas stream (usually synthetic air or oxygen) to a detector, in particular a NDIR (non-dispersive infrared) detector, where it is quantitatively measured. There are various measurement devices, which are commercially available for determination of the TOC.

Preferably, in this implementation, the aqueous mixture in step a) is prepared with sulfate and/or a hydroxide salts, especially calcium sulfate, sodium sulfate, potassium sulfate, potassium hydroxide, calcium hydroxide and/or sodium hydroxide. In particular with a pH as described above. Such aqueous mixtures reflect the conditions present in mortar or concrete compositions in which the plasticizing additives are typically used.

Preferably, in this implementation, in step c) a weight ratio of the aqueous mixture or a sample thereof to the sample of sand is 1 - 10, especially 2 - 5, in particular 3 -4.

In the second highly preferred implementation, a significant reduction in the total organic content between step b) and step e) indicates the presence of materials adsorbing the plasticizing additive within the sand.

In a further preferred embodiment of the inventive method, it is possible to check in addition to the adsorption properties of the given sand, whether the fines content of the sand could cause problems as well or not.

This is possible because during steps c) and d), the potential presence of fines can be observed since they are suspended in the supernatant liquid. Although, determination of fines with the inventive method does not replace dry sieving, additional and important information concerning fines are obtainable. Especially, fines being adhered onto bigger aggregates and which are not detected during the dry sieving process, will be separated from bigger aggregates in step d) and, thus, can be qualitatively measured.

For this, in step d) a raw sample of supernatant liquid from the aqueous mixture as well as a purified sample, which is devoid of suspended fines with a grain size < 125 µm, especially < 63 µm , in particular < 2 µm, of the supernatant liquid are taken. In particular, the purified sample is obtained by filtration and/or centrifugation, especially by filtration.

Then, in step e), the characteristics of the raw sample and of the purified sample are determined individually and compared individually to the characteristic of the sample of the aqueous mixture of step b). From this comparison, the following information can be derived:
- If both, the characteristic of the raw sample and the purified sample determined in step e) differ from the characteristic of the sample of the aqueous mixture of step b) by more than a given threshold, it can be concluded that the given sand is problematic with regard to the adsorption of plasticizing additives. If this sand is used for a mortar or concrete composition, an appropriate mitigating strategy is required, e.g. by adding a mitigating agent compensating for the adsorption of the plasticizing additive. In this case, preferably, an additive compensating the adsorption of the plasticizing additive is selected as the mitigating agent and/or the dosage of the plasticizing additive is adjusted.
- If the characteristic of the raw sample differs from the characteristic of the sample of the aqueous mixture of step b) by more than a given threshold, and the characteristic of the purified sample differs from the characteristic of the sample of the aqueous mixture of step b) by less than a given threshold, it can be concluded that the given sand is problematic with regard to the fines content. If this sand is used for a mortar or concrete composition, an appropriate mitigating strategy is required, e.g. by adding a mitigating agent compensating a high fines content and/or by taking other measures to cope with high fines, for example optimization of mix design. Especially, an additive compensating a high fines content is selected as the mitigating agent is selected in this case.
- If the characteristics of the raw sample and the purified samples differ from the characteristic of the sample of the aqueous mixture of step b) both by less than a given threshold, it can be concluded that the sand is unproblematic with regard to plasticizer adsorption of the plasticizing additive and fines content.

In general, a "high fines content" or a "fines problem" in particular is meant to be a situation in which the sand to be analyzed comprises fines, which affect the rheology of a mineral binder composition comprising that sand. Especially a high fines content is meant to be a situation in which the characteristic of the raw sample determined in step e) differs from the characteristic of the sample of the aqueous mixture of step b) by more than a predefined threshold, and the characteristic of the purified sample determined in step e) differs from the characteristic of the sample of the aqueous mixture of step b) by less than the predefined threshold.

Preferably, if the comparison of step f) shows that the characteristics of the raw sample and/or the purified sample and the characteristic of the aqueous mixture or the sample thereof differ from each other by more than a given threshold, steps c) to f) are repeated, whereby in step c) a different aqueous mixture comprising a modified concentration of the plasticizing additive and/or comprising a defined concentration of a mitigating agent is used.

Especially, steps c) to f) are repeated until the comparison in step f) shows that the characteristics of the raw sample and the purified sample and the characteristic of the aqueous mixture or the sample thereof differ from each other by less than the given threshold.

This allows for finding an optimal concentration of the plasticizing additive and/or a suitable mitigating agent if the given sand is used for a mortar or concrete composition.

Furthermore, the invention is concerned with a method of preparing a mineral binder composition, whereby an admixture is provided as described above and mixed with water, a mineral binder, sand as used in the inventive method and optionally further aggregates. Thereby, the admixture preferably comprises the plasticizing additive and/or the mitigating agent in proportions derived with the inventive method, especially as derived in the last repetition of steps c) to f) as described above.

Especially, the inventive method comprises a step of providing a mineral binder composition comprising a sand of type as used in the inventive method and optionally further aggregates, and:
- a mitigating agent for compensation adsorption of the plasticizing additive, if step f) on the first execution shows that the characteristics of step b) and e) differ from each other by more than a predefined threshold, whereby, preferably, the plasticizing additive and/or the mitigating agent is used in proportions derived with the method as described above, especially as derived in the last repetition of steps c) to f) as described above;
- optionally, a mitigating agent for compensation of water adsorption, if step a') shows that the water demand is higher and step f) on the first execution shows that the characteristics of step b) and e) do not differ from each other by more than a predefined threshold;
- optionally, a mitigating agent for compensation high fines and/or measures to cope with high fines, e.g. adjusting the mix design of the mineral binder composition, if step f) on the first execution shows that when taking a raw and a purified sample in step d) as described above, the characteristic of the raw sample differs from the characteristic of a sample of the aqueous mixture of step b) by more than a predefined threshold, and the characteristic of the purified sample differs from the characteristic of the sample of the aqueous mixture of step b) by less than the predefined threshold;
- optionally, a mitigating agent for compensation adsorption of the plasticizing additive, especially as described above, and a mitigating agent for compensation high fines and/or measures to cope with high fines, especially as described above; if step f) on the first execution shows that when taking a raw and a purified sample in step d) as described above, the characteristics of both, the raw sample and the purified sample differ from the characteristic of a sample of the aqueous mixture of step b) by more than a predefined threshold, and if the characteristic of the raw sample differs more strongly from the characteristic of the sample of the aqueous mixture of step b) than the characteristic of the purified sample.

Thereby, preferably, the difference of the characteristics between the raw sample and the purified sample is at least 10%, in particular at least 20%, especially at least 30%, with respect to the characteristic of the purified sample.

Further advantageous embodiments and combinations of features of the invention will emerge from the following exemplary embodiments and the totality of the patent claims.

### Brief description of figure

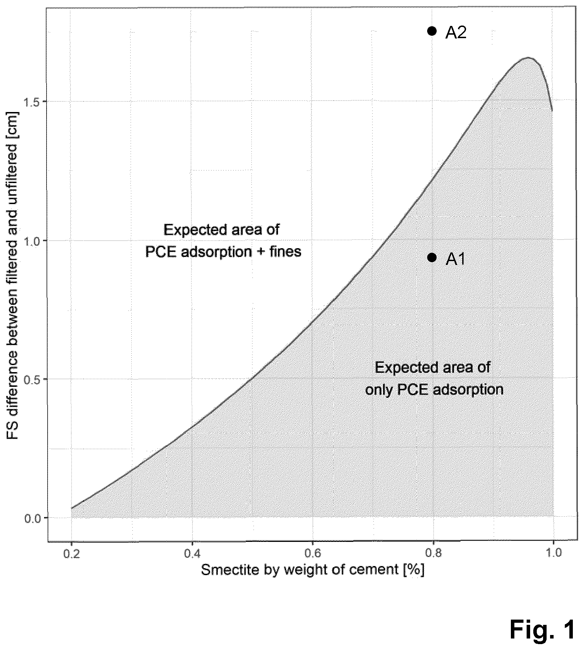

Fig. 1 shows the relation between the smectite content in a cement composition and the difference in flow spread (FS) between filtered (purified) and unfiltered (raw) sample (solid line). The FS was obtained by the inventive method.

### Exemplary embodiments

### 1. Cement slurry-based method

### Step 1: Determination of PCE concentration for reference flow:

The goal of this step is to determine a necessary PCE concentration to achieve a flow spread of 14 cm using a fixed w/c of 0.35. Thereby, a solution of 35 g water and 0.45 g of a PCE (e.g. Sika^{®} ViscoCrete^{®}-125 P, adjusted to a solid content of 30% in water) is mixed with 100 g of Portland cement in a cup for 30 seconds with a wooden spatula ensuring a homogenous mixing of the slurry. Subsequently, the so obtained cements slurry is filled in a mini cone (height: 58 mm; lower inner diameter: 38 mm; upper inner diameter: 19 mm) placed on a flat and dry glass plate. Then the slump flow of the slurry is determined by slowly lifting up the mini cone and measuring the largest extension of the slurry after completed spreading. If necessary, the procedure is repeated with varying PCE dosages until a flow of 14 ± 0.5 cm is achieved.

### Step 2 : Mixing with sand

In this step, a sample of sand is contacted with an aqueous solution as determined in step 1. Specifically, if 0.45 g PCE were needed to obtain a flow of 14 cm, 100 g sand (dried in an oven at 60°C) is mixed stepwise with 1.93 g of the PCE used in step 1 and 150 g water and stirred with a wooden spatula for 60 seconds in total. Thereby, the total amount of water is added in portions of 50 g and 100 g each. Specifically, the first portion of water is added for pre-wetting the sample of sand, then the PCE is added into the pre-wetted mixture and subsequently the remaining portion of water is added.

Immediately after mixing, 35 g of the supernatant is taken from the mixture with a pipette without filtering as a raw sample in a first cup.

Additional quantities of the suspension covering the sand are extracted with a syringe, which then is discharged through a 0.2 µm filter into a separate second cup. This procedure is repeated until the total amount of liquid in the second cup is 35 g. This sample is referred to as purified sample.

### Step 3: Comparison of flow characteristics

The goal of this step is to identify if the sand sample was adsorbing PCEs in step 2 by comparing the flow spread with the initial reference flow.

First, 100 g of cement (the same one as used in step 1) is mixed with the raw (unfiltered) sample obtained in step 2 and stirred for 30 seconds with a wooden spatula by hand. Then the slump flow is determined similar to step 1.

Second, 100 g of cement (the same one as used in step 1) is mixed with the purified (filtered) sample obtained in step 2 and stirred for 30 seconds with a wooden spatula. Then the slump flow is determined similar to step 1.

If the slump flow of the test with the raw sample and the purified sample is comparable to the reference flow (i.e. 14 cm), the results can be interpreted as no PCE adsorption and additionally a low fines content. In this case, the sand analyzed can be used in mortar or concrete compositions without further additives provided the water demand, which can be determined separately, equals the standard water demand for the given mineral binder composition. Otherwise it is recommended to add a mitigating agent for compensation of water adsorption.

If the slump flow of the test with the purified sample is comparable to the reference flow (i.e. 14 cm) and at the same time, the flow spread of the test with the raw sample is smaller than 13.5 cm, a potential "high fines" problem exists. In this case, a mitigating agent for a "high fines" situation or other solutions for high fines, e.g. optimizing the mix design of the mineral binder composition, should be considered if the sand analyzed is used for mortar or concrete compositions.

If the flow spread of the test with the raw sample and the purified sample are smaller than 13.5 cm, it can be concluded that there is an PCE adsorption problem. In this case, a mitigating agent for compensating the PCE adsorption should be considered if the sand analyzed is used for mortar or concrete compositions. In order to identify the specific source for PCE adsorption and to propose a suitable mitigating agent, the method according to the following step 4 needs to be conducted.

### Step 4: Identifying the source for PCE adsorption

It is the goal of this step to identify the source of PCE adsorption. Thus, step 4 is only performed if the flow spread measured in step 3 with the purified sample is lower than e.g. 13.5 cm (= threshold).

Possible sources of PCE adsorption are for example due to swelling clays.

For example, in order to check whether the origin of PCE adsorption in the sand is related to swelling clays, a clay blocking additive can be added to the PCE solution of step 2, e.g. by adding the clay blocking additive to the first portion of water used for prewetting. Then steps 2 and 3 are repeated with the modified PCE solution comprising the clay blocking additive. If the flow spread obtained with the purified sample in repeated step 3 is improved, it can be concluded that swelling clays are at least partly responsible for the PCE adsorption.

### Quantification of smectite content and mitigating additive

With the help of the inventive method, it is possible to derive a relation between the flow spread and the concentration of the adsorbing substance by interpolation.

For example, if smectite (a swelling clay) is identified as the impurity in the sand (can be checked with step 4 or with X-ray diffraction), the following equation describes the relation between the smectite content S (in wt.%) and the flow spread FS (in cm) obtained with the purified sample: S = 1.039 - 0.001 × e^{0.484 × FS}.

Likewise, the amount of smectite S (in wt.%) can be related to a certain dosage E (in wt.%) of a mitigating agent (in this case the non-ionic comb polymer P1 as described in WO 2020/070095 A1, page 32, line 15 - page 33, line 4;) required to restore the performance of the PCE at the given dosage: E = 4.2006 × S - 0.0372 (formula depending on mitigating agent).

Alternatively, the performance of the PCE can be restored by increasing its dosage by adding an additional amount P of PCE (e.g. Sika^{®} ViscoCrete^{®}-125 P, adjusted to a solid content of 30% in water): P = -1.6874 × FS + 22.157 (formula depending on specific PCE).

Thus, the cement slurry-based method allows for directly identifying the origin of PCE adsorption, the type of mitigating agent and its concentration required for compensating the PCE adsorption out of simple measurements of the flow spread of different samples.

Based on this information, a suitable admixture can be provided by mixing the plasticizing additive and the mitigating agent in appropriate proportions.

### Identification of combined problems

A combined problem can be identified by plotting the relation between the amount of a specific impurity in a cement composition and the difference in flow spread (FS) between filtered (purified) and unfiltered (raw) sample whereby the FS is obtained with the inventive method.

Fig. 1 shows an example of such a plot for smectite. The solid line was obtained by a calibration procedure. Thereby the FS for the filtered sample and the FS for the unfiltered sample were determined with the inventive method for different sand samples comprising increasing proportions of smectite. Thereby, smectite was used as the only source of PCE adsorption. Thus, the solid line in Fig. 1 reflects the calibrated relation between the difference in FS and the proportion of smectite. In principle, for each source of PCE adsorption, a separate calibration curve is required.

The calibrated curve of Fig. 1 can be used for identifying the type of problem with a given sand if smectite is known to be present in the sand in a given concentration (which can e.g. be determined by X-ray diffraction). If a sand sample A1 with a given smectite concentration (0.8 wt.% of cement) shows an FS difference, which is located below (< 1.21 cm) the solid line in Fig. 1, then the sand has a pure adsorption problem with regard to the plasticizing additive. If, on the other hand, another sand sample A2 with the same smectite concentration shows a FS difference above the solid line (> 1.21 cm), then there is a combined problem of adsorption of the plasticizing additive and a high fines content. Thus, depending on the FS difference at a specific smectite concentration (above/below the solid line) in a certain sand sample, appropriate mitigating measures can be taken in a targeted manner.

### 2. TOC-based method

In a first step, an aqueous alkaline solution with a pH of 13 comprising the following salt components is produced:

| | |
|---|---|
| CaSO₄ . 2 H₂O | 1.72 g/liter |
| Na₂SO4 | 6.959 g/liter |
| K₂SO₄ | 4.757 g/liter |
| KOH | 7.12 g/liter |

As a second step, a solution consisting of 90 ml of the alkaline solution of the first step and 10 ml of a PCE solution (1 % solid content of the PCE) is prepared.

In a third step, the total organic content of a sample of 20 ml of the solution of the second step is measured, e.g. with the device TOC-V CPN from Shimadzu.

In the third step, a solution consisting of 90 ml of the alkaline solution of the first step, 10 ml of a PCE solution (1 % solid content of the PCE) and 30 g of sand to be analyzed is prepared, vibrated for 90 minutes on a vibrating shaking table (250 rpm) and then subjected to centrifugation for 10 min (4'000 rpm).

In a fourth step, 20 ml of the solution covering the sand is taken with a syringe and filtered through a filter and the total organic content of the solution is determined.

The difference in total organic content of the solution of the second step and the solution of the fourth step is directly related to the adsorption of the PCE by adsorbing impurities present in the sand.

For example, when testing three different specific sands, all giving rise to high superplasticizer demands (quantity of superplasticizer required to achieve a defined consistency) in hydraulic binder compositions, a PCE adsorption (= 100% - TOC content) of 10.6 wt.%, 12.6 wt.% and 16.1 wt.%, respectively, was obtained. These results show that the TOC-based method is well suitable for quantifying undesired adsorption of the plasticizing additive.

In order to identify the specific source of PCE adsorption and to propose a suitable mitigating agent, a mitigating agent can be added to the solution of the third step and the third and fourth step can be repeated until the difference in total organic content falls below a threshold, e.g. 2% of the total organic content of the solution of the second step.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. Method for characterizing sands with regard to adsorption of plasticizing additives, comprising the steps of:
a) Providing an aqueous mixture of the plasticizing additive with a defined concentration of the plasticizing additive;
b) Determination of a characteristic of the aqueous mixture whereby the characteristic is related to the proportion of the plasticizing additive in the aqueous mixture;
c) Contacting a sample of sand to be analyzed with the aqueous mixture or a sample thereof, so that the sand sample is completely immersed in the aqueous mixture or the sample thereof;
d) Taking a sample of supernatant liquid from the mixture of step c);
e) Determination of the same characteristic as in step b) of the sample of supernatant liquid;
f) Comparing the characteristic of the aqueous mixture or the sample thereof obtained in step b) with the characteristic of the sample of supernatant liquid of step e) in order to decide whether the characteristics differ from each other by more than a predefined threshold or not.

2. Method according to claim 1, wherein, if the comparison of step f) shows that the characteristic of the aqueous mixture or the sample thereof and the characteristic of the sample of supernatant liquid differ from each other by more than a given threshold, steps c) to f) are repeated, whereby in step c) a different aqueous mixture comprising a modified concentration of the plasticizing additive and/or comprising a defined concentration of a mitigating agent is used.

3. Method according to claim 2, whereby the repetition is continued until the comparison in step f) shows that the characteristics of the aqueous mixture or a sample thereof and the characteristic of the sample of supernatant liquid differ from each other by less than the given threshold, whereby preferably the concentration of the plasticizing additive and/or the type of mitigating agent and/or its concentration is modified in each repetition.

4. Method according to any of claim 2 - 3, wherein an admixture for preparing a mineral binder composition is provided, whereby the admixture comprises the plasticizing additive and/or the mitigating agent in proportions as derived with the method according to any of claims 2 - 3, especially as derived in the last repetition of the method of claim 3.

5. Method according to any of claim 1 - 4, wherein the inventive method additionally comprises an additional step a') comprising the following sub-steps:
(i) Determination of the water demand of a mineral binder composition comprising the sand to be analyzed and the plasticizing additive;
(ii) Comparing the water demand determined in sub-step (i) with a standard water demand for the given mineral binder composition.

6. Method according to any of claims 1 - 5, wherein during and/or after step d), fines, especially fines with a grain size < 125 µm, especially < 63 µm, in particular < 2 µm, are removed from the sample of supernatant liquid, especially by filtration and/or centrifugation.

7. Method according to any of claims 1 - 6, wherein
- in step b), an aqueous slurry comprising a sample of the aqueous mixture of step a) and a defined proportion of mineral binder, especially cement, with a given ratio (w/c) of water to mineral binder is produced; and a rheology parameter of the aqueous slurry, especially the slump flow, is determined as the characteristic of the sample of the aqueous mixture; and
- in step e) another aqueous slurry is produced with the same mineral binder as in step b) and the supernatant liquid as the water, whereby the ratio of water or supernatant liquid, respectively, is the same as in in step b); and the same rheology parameters in step b), especially the slump flow, , is determined as the characteristic of the sample of supernatant liquid.

8. Method according to claim 7, wherein the concentration of the plasticizing additive in step a) is chosen to achieve a predefined rheology parameter, in particular a predefined slump flow, of the slurry produced in step b) at a predefined proportion of mineral binder and a predefined ratio (w/c) of water to mineral binder.

9. Method according to any of claims 1 - 8, wherein in step b) and e), the total organic content of the aqueous mixture or the sample of supernatant liquid is determined as the characteristic.

10. Method according to any of claims 1 - 9, wherein in step a) the aqueous mixture is prepared with a pH of 11 - 14, especially 12 - 13.5, in particular 12.5 - 13.5 and/or in step a), the aqueous mixture is prepared with sulfate and/or a hydroxide salts, especially calcium sulfate, sodium sulfate, potassium sulfate, potassium hydroxide, calcium hydroxide and/or sodium hydroxide.

11. Method according to any of claims 1 - 10, wherein the plasticizing additive is a polycarboxylate ether (PCE).

12. Method according to any of claims 1 - 11, wherein in step d) a raw sample of supernatant liquid from the aqueous mixture as well as a purified sample, which is devoid of suspended fines with a grain size < 125 µm, especially < 63 µm, in particular < 2 µm, of the supernatant liquid are taken; and in step e) the characteristics of the raw sample and of the purified sample are determined individually, and compared to the characteristic of the sample of the aqueous mixture of step b).

13. Method according to claim 12, wherein the purified sample is obtained by filtration and/or centrifugation, especially by filtration.

14. Method according to claims 12 or 13, wherein:
- if the characteristic of the raw sample and the purified sample determined in step e) differ from the characteristic of the sample of the aqueous mixture of step b) by more than a given threshold, an additive compensating the adsorption of the plasticizing additive is selected as the mitigating agent;
- if the characteristic of the raw sample differs from the characteristic of the sample of the aqueous mixture of step b) by more than a given threshold, and the characteristic of the purified sample differs from the characteristic of the sample of the aqueous mixture of step b) by less than a given threshold, an additive compensating a high fines content is selected as the mitigating agent;

15. Method of preparing a mineral binder composition, whereby an admixture is provided according to any of claims claim 4 - 14 and mixed with water, a mineral binder, sand of type as analyzed in the method of any of claims 4 - 14, and optionally further aggregates.

16. Method according to any of claims 5 - 15 comprising a step of providing a mineral binder composition comprising a sand of type as used in any of claims 1 - 15 and optionally further aggregates, and:
- a mitigating agent for compensation adsorption of the plasticizing additive, if step f) on the first execution shows that the characteristics of step b) and e) differ from each other by more than a predefined threshold, whereby, preferably, the plasticizing additive and/or the mitigating agent is used in proportions derived with the method according to any of claims 1 - 15, especially as derived in the last repetition of steps c) to f) according to claim 4;
- optionally, a mitigating agent for compensation of water adsorption, if step a') shows that the water demand is higher and step f) on the first execution shows that the characteristics of step b) and e) do not differ from each other by more than a predefined threshold;
- optionally, a mitigating agent for compensation high fines and/or measures to cope with high fines, e.g. adjusting the mix design of the mineral binder composition, if step f) on the first execution shows that when taking a raw and a purified sample in step d) as described above, the characteristic of the raw sample differs from the characteristic of a sample of the aqueous mixture of step b) by more than a given threshold, and the characteristic of the purified sample differs from the characteristic of the sample of the aqueous mixture of step b) by less than the given threshold:
- optionally, a mitigating agent for compensation adsorption of the plasticizing additive and a mitigating agent for compensation high fines and/or measures to cope with high fines, if step f) on the first execution shows that when taking a raw and a purified sample in step d), the characteristics of both, the raw sample and the purified sample differ from the characteristic of a sample of the aqueous mixture of step b) by more than a predefined threshold, and if the characteristic of the raw sample differs more strongly from the characteristic of the sample of the aqueous mixture of step b) than the characteristic of the purified sample.
